# FASCICULE DE BREVET EUROPEEN

(11) **EP 1 041 692 B1**
(45) Date de publication et mention de la délivrance du brevet: **29.05.2002**
(21) Numéro de dépôt: 00420051.5
(22) Date de dépôt: 23.03.2000
(51) Int. Cl.: H02B 1/18

(54) **Connecteur de raccordement et ensemble de raccordement électrique entre un jeu de barres et au moins un câble conducteur**
Elektrische Verbindungsanordnung zwischen einer Stromschiene und mindestens einem Leitenden Kabel
Electrical connection assembly between a busbar system and at least one conducting cable

(30) Priorité: 29.03.1999 FR 9904196
(43) Date de publication de la demande: 04.10.2000
(73) Titulaire: MECELEC INDUSTRIES, F-07300 Tournon sur Rhône (FR)
(72) Inventeur: Senebier, Claude, 2600 Valence (FR); Gerardin, Laurent, 07500 Guilherand-Granges (FR)
(74) Mandataire: Myon, Gérard Jean-Pierre

(56) Documents cités:
- DE-A- 3 316 203
- FR-A- 2 764 742

## Description

L'invention a trait à un connecteur de raccordement électrique d'un conducteur à une barre d'un système à barres et à un ensemble de raccordement électrique entre un jeu de barres et au moins un câble conducteur.

Un tel ensemble de raccordement électrique peut être utilisé dans une armoire de raccordement, par exemple dans une armoire de répartition de courant entre plusieurs habitations situées dans une rue ou pour relier entre eux plusieurs réseaux, en vue de l'inter-connexion des transformateurs utilisés pour la distribution d'énergie afin de permettre, par exemple, des opérations de maintenance sur l'un ou plusieurs de ces transformateurs.

Un tel ensemble de raccordement est connu, notamment, de FR-A-2 715 775 et comprend des connecteurs prévus pour être disposés au voisinage les uns des autres en étant raccordés sur des barres du système à barres. Chaque connecteur s'étend selon une direction globalement perpendiculaire à la direction des barres et reçoit l'extrémité d'un conducteur qu'il permet de relier à la barre sur laquelle il est raccordé.

Par FR-A-2 731 847, il est connu de réaliser un système de branchement protégé sur un dispositif de raccordement électrique du type précité qui comprend un étrier fixé sur une barre et prévu pour recevoir une borne d'un fusible dont l'autre borne est reçue dans un second étrier, lui-même raccordé à un conducteur.

Dans tous les cas, le conducteur est disposé, dans sa zone de raccordement au connecteur, selon la direction principale du connecteur.

Le document FR-A-2764742 décrit également un dispositif de raccordement électrique d'un conducteur à une barre d'un système à barres conformément au préambule de la revendication 1.

Or, dans un système de raccordement tétrapolaire, deux câbles peuvent être raccordés sur deux barres de phases ou sur une barre de phase et une barre de neutre, en étant alignés selon leur direction principale, c'est-à-dire perpendiculairement à la direction des barres. Dans une telle disposition, et compte tenu de la rigidité de certains conducteurs utilisés, notamment pour des puissances relativement importantes, il peut arriver qu'un conducteur dont l'extrémité est immobilisée dans un connecteur interfère avec un connecteur voisin, au point de gêner la mise en place d'un des connecteurs ou son exploitation, par exemple lors de la manoeuvre d'une cartouche fusible, ce qui peut rendre le travail d'un opérateur délicat, voire imprécis.

C'est à ces inconvénients qu'entend plus particulièrement remédier l'invention en proposant un connecteur permettant une densité élevée de raccordement sur un système à barres, alors que le conducteur auquel il est raccordé n'interfère pas sensiblement avec les connecteurs voisins.

Dans cet esprit, l'invention concerne un connecteur de raccordement électrique d'un conducteur à une barre d'un système à barres dans lequel plusieurs barres s'étendent parallèlement les unes aux autres selon une première direction, alors que le connecteur s'étend principalement selon une seconde direction globalement perpendiculaire à cette première direction, et est pourvu d'un organe de connexion amovible sur cette barre, le connecteur comprenant des moyens de réception d'une extrémité du conducteur, caractérisé en ce que ces moyens de réception sont aptes à immobiliser l'extrémité du conducteur dans une position telle qu'elle est orientée selon une troisième direction inclinée par rapport à cette seconde direction.

Grâce à l'invention, le conducteur émerge du connecteur selon une direction telle que les interférences entre ce conducteur et un connecteur voisin sont minimisées. La souplesse intrinsèque du conducteur permet de le courber à partir de la gaine d'un câble auquel il appartient.

Selon des aspects avantageux de l'invention, le connecteur incorpore une ou plusieurs des caractéristiques suivantes :
- la troisième direction est inclinée par rapport à la seconde direction d'un angle compris entre 20 et 70°, de préférence compris entre 30 et 50°, de préférence encore de l'ordre de 40°.
- les moyens de réception comprennent un étrier de blocage de l'extrémité du conducteur, cet étrier étant orienté second cette troisième direction.
- les moyens de réception et d'immobilisation sont séparés de l'extérieur du connecteur par une enveloppe isolante, cette enveloppe étant pourvue d'un orifice de passage du conducteur. Cette enveloppe isolante est avantageusement conformée pour ne pas gêner l'accès à un organe de connexion amovible d'un autre connecteur, voisin selon la seconde direction. En particulier, cette enveloppe peut comprendre une zone médiane incurvée.
- une semelle conductrice est apte à être raccordée électriquement à la barre et à former âme pour le connecteur.
- une mâchoire amont et une mâchoire aval de réception et de raccordement d'un élément fusible ou d'un barreau conducteur sont prévues, chaque mâchoire étant séparée de son environnement par une enveloppe isolante. Dans ce cas, on peut prévoir des moyens d'isolation électrique de la partie du fusible ou du barreau conducteur située à l'extérieur des enveloppes isolantes des mâchoires, lorsqu'il est en place dans le connecteur.

L'invention concerne également un ensemble de raccordement électrique entre un jeu de barres et au moins un câble conducteur qui comprend au moins un connecteur tel que précédemment décrit. Un tel ensemble de raccordement peut être compact, alors que la mise en place des connecteurs et les opérations de maintenance demeurent aisées pour un opérateur.

L'invention sera mieux comprise et d'autres avantages de celle-ci apparaîtront plus clairement à la lumière de la description qui va suivre de deux modes de réalisation d'un connecteur et d'un ensemble de raccordement conforme à son principe, donnée uniquement à titre d'exemple et faite en référence aux dessins annexés dans lesquels :
- la figure 1 est une représentation schématique de principe d'un ensemble de raccordement électrique conforme à l'invention ;
- la figure 2 est une vue en perspective éclatée d'un connecteur utilisé dans le dispositif de raccordement de la figure 1 ;
- la figure 3 est une coupe longitudinale du connecteur de la figure 2, en configuration montée sur une barre d'un système à barres ;
- la figure 4 est une coupe horizontale partielle selon la ligne IV-IV à la figure 3 ;
- la figure 5 est une vue analogue à la figure 1 pour un ensemble de raccordement conforme à un second mode de réalisation de l'invention et
- la figure 6 est une vue en perspective d'un connecteur utilisé dans l'ensemble de raccordement de la figure 5.

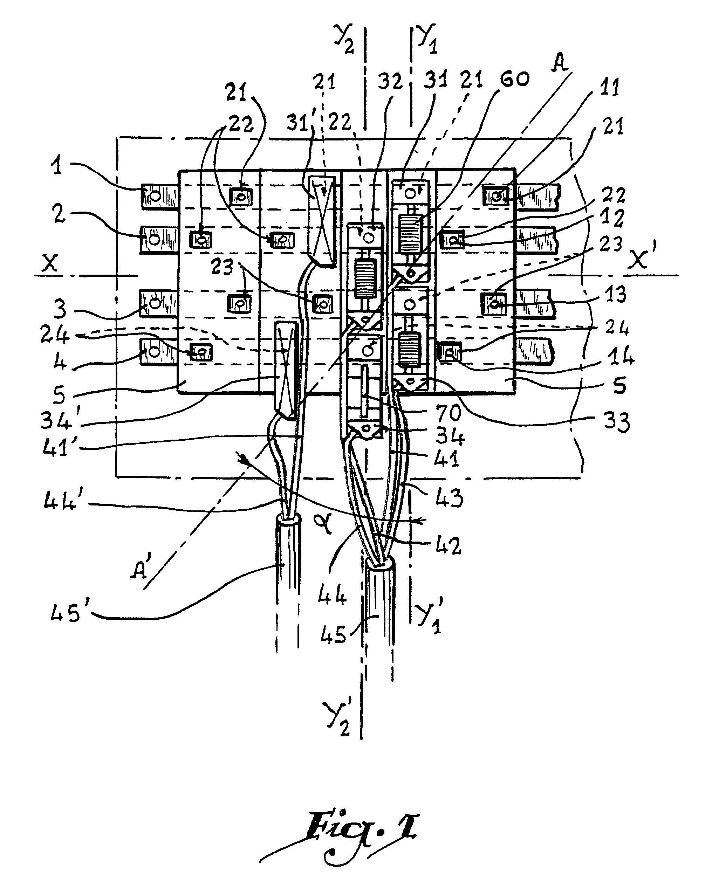

A la figure 1, trois barres respectivement référencées 1, 2 et 3 véhiculent les phases d'un courant triphasé. Une quatrième barre 4 est reliée au neutre. Les barres 1 à 4 sont disposées parallèlement les unes aux autres selon une direction X-X' et sous plusieurs modules 5 dont deux sont représentés, ces modules pouvant être du type connu de FR-A-2 715 775.

Chaque barre 1 à 4 est pourvue, au niveau de chaque module 5, d'un orifice 11, 12, 13 ou 14 autour duquel est ménagée une zone 21, 22, 23 ou 24 de raccordement d'un connecteur du type de ceux représentés à la figure 1 avec les références 31, 32, 33 ou 34.

Chaque connecteur 31 à 34 est de forme globalement allongée et s'étend selon une direction Y₁-Y'₁ ou Y₂-Y'₂ globalement perpendiculaire à la direction X-X'. Sur chaque connecteur 31 à 34, est respectivement raccordé et immobilisé un conducteur 41 à 44 appartenant à un câble 45 d'alimentation d'un site d'utilisation en courant triphasé.

Comme représenté sur la gauche de la figure 1, des connecteurs analogues 31' et 34' peuvent être utilisés pour raccorder respectivement des conducteurs 41' et 44' appartenant à un câble 45' aux barres 1 et 4 afin d'alimenter un site d'utilisation en courant monophasé.

Dans la configuration des connecteurs 31 à 34, la densité d'implantation des connecteurs est maximale et l'on note que la direction d'émergence A-A' du conducteur 41 par rapport au connecteur 31 est inclinée d'un angle α de l'ordre de 40° par rapport à la direction Y₁-Y'₁, de telle sorte que le connecteur 31 n'a pas tendance à gêner la mise en place du connecteur 33 s'il est raccordé à la barre 1 avant que le connecteur 33 ne soit raccordé à la barre 3.

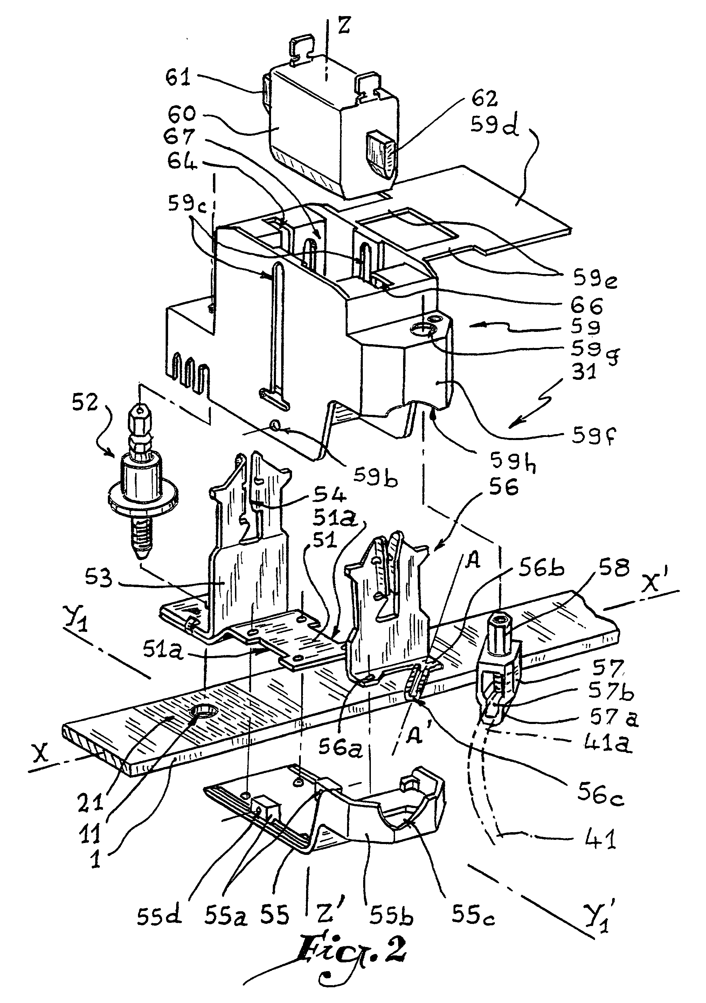

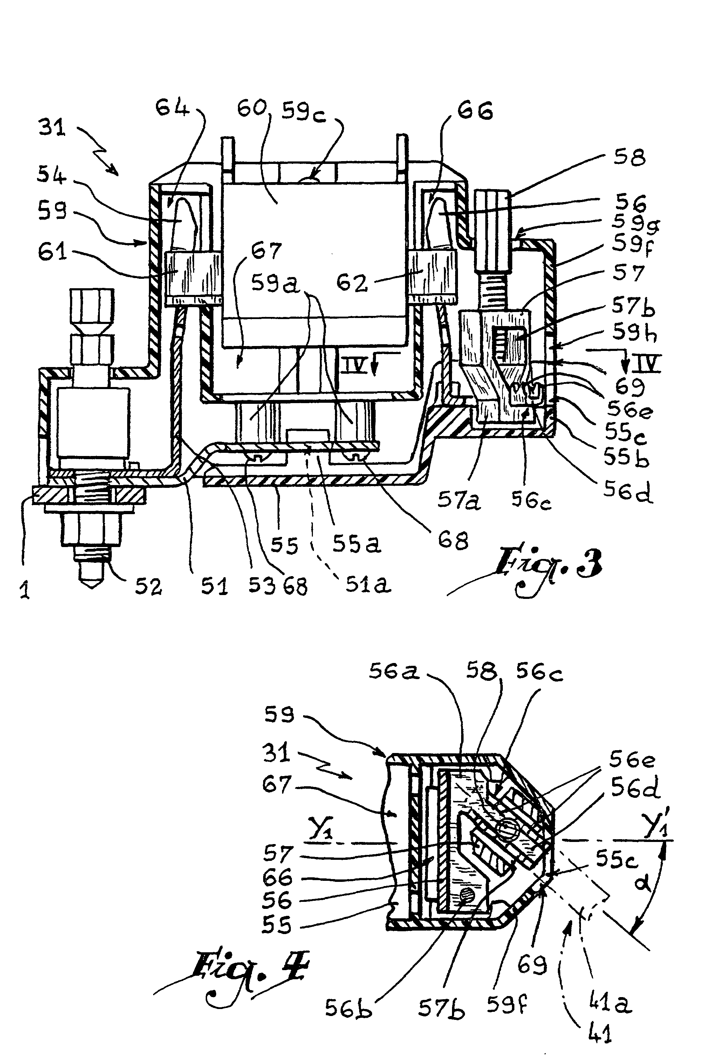

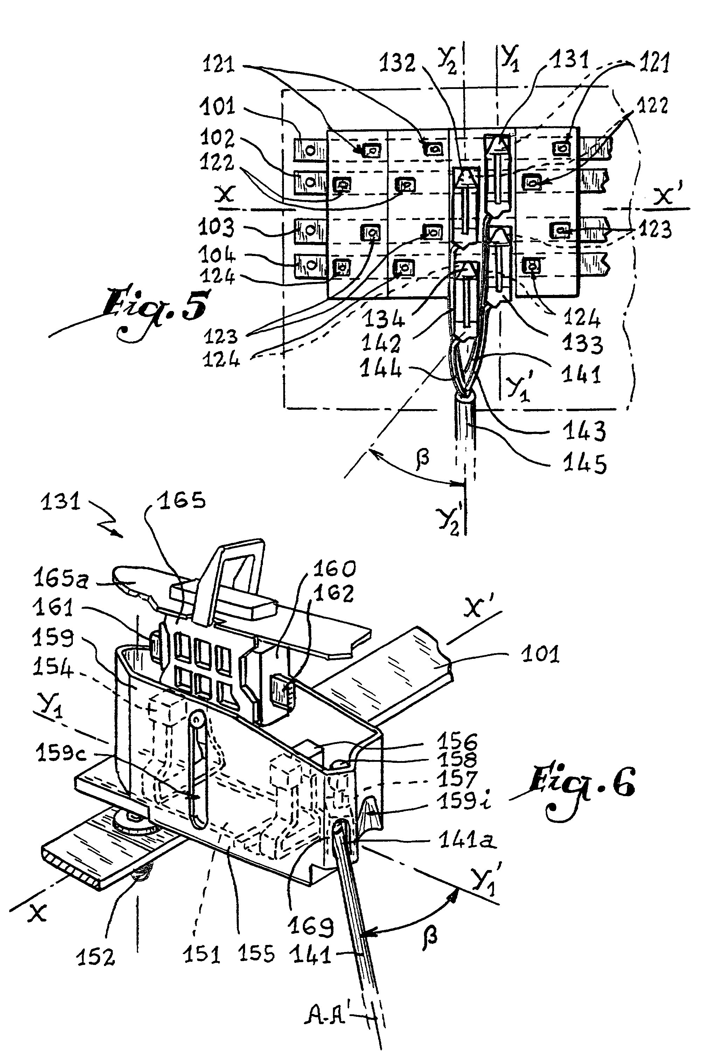

Les éléments 1, 31 et 41 sont visibles aux figures 2 à 4, le conducteur 41 étant représenté en traits mixtes. Le connecteur 31 comprend une semelle conductrice 51, par exemple métallique, destinée à être plaquée contre la zone 21 grâce à une vis 52 à tête sécable. La semelle 51 s'étend à partir de la zone 21 selon la zone Y₁-Y'₁, de telle sorte qu'elle forme une âme de rigidification du connecteur 31. Dans sa partie recouvrant la zone 21, la semelle 51 est doublée d'une plaque conductrice 53 pliée selon un angle droit, de telle sorte qu'elle s'étend parallèlement à une direction Z-Z' globalement perpendiculaire aux directions X-X' et Y-Y' et parallèle à l'axe de la vis 52. Dans sa partie parallèle à la direction Z-Z', la plaque 53 est découpée de façon à former une première mâchoire 54.

Une plaque de fond 55 en matière isolante est prévue pour être immobilisée sous la semelle 51 et porte des saillies 55a aptes à coopérer avec des encoches 51a de forme complémentaire prévues sur les côtés de la semelle 51. La plaque de fond 55 est apte à supporter une mâchoire 56 formée dans une plaque conductrice et s'étendant dans un plan globalement parallèle à celui de la mâchoire 54. Un perçage 56a de passage d'une vis non représentée permet l'immobilisation de la mâchoire 56 par rapport à la plaque de fond 55. La mâchoire 56 se prolonge, au niveau de son pied 56b, par une section 56c de perforation de l'isolant de l'extrémité 41a du conducteur 41. La partie 56c est conformée en pliant globalement en forme de U une languette 56d bordée de dents 56e.

Un cavalier 57 pourvu d'une vis de serrage isolante 58 est prévu pour recevoir, dans une partie inférieure 57a, la section 56c, alors que l'extrémité 41a du conducteur 41 peut être reçue, dans le cavalier 57, entre la section 56c et la vis 58. Lorsqu'il est disposé autour de la section 56c, l'étrier 57 est disposé selon la direction A-A', de telle sorte que le logement 57b de réception et d'immobilisation de l'extrémité 41a du conducteur 41 est orienté selon cette direction. Il est ainsi possible d'obtenir l'orientation préférentielle de l'extrémité du câble 41 mentionnée en référence à la figure 1.

La plaque de fond 55 se prolonge par une bordure 55b qui entoure la section 56c et la partie inférieure du cavalier 57 et est pourvue d'une encoche 55c alignée avec la languette 56d.

Une enveloppe 59 est prévue pour être disposée au-dessus et autour des éléments 51, 53, 54 et 56 à 58. Cette enveloppe est conformée pour définir deux espaces 64 et 66 de réception et de confinement des mâchoires 54 et 56. Dans sa partie centrale, l'enveloppe 59 définit également un logement 67 de réception d'un fusible 60 muni de deux bornes 61 et 62 prévues pour coopérer respectivement avec les mâchoires 54 et 56.

Quatre vis de fixation, dont deux sont visibles à la figure 3 avec la référence 68, permettent de solidariser la semelle 51 avec des bossages 59a prévus en partie inférieure de l'enveloppe 59. Par ailleurs, des perçages 59b prévus sur le côté de l'enveloppe 59 sont destinés à être alignés avec des taraudages 55d prévus dans les saillies 55a, ce qui permet de solidariser la plaque de fond 55 et l'enveloppe 59. Il peut ainsi être formé un connecteur dont toutes les parties conductrices susceptibles d'être portées au potentiel de la barre 1 sont isolées de l'extérieur par l'enveloppe 59 et la plaque 55.

L'enveloppe 59 est également pourvue de deux lumières oblongues 59c permettant le guidage d'un éventuel tiroir de manoeuvre du fusible 60 par rapport aux mâchoires 54 et 56.

Ainsi, lorsque la vis 52 est en place dans l'orifice 11, la mâchoire 54 est portée au potentiel de la barre 1. Lorsque le fusible 60 est en place, ce potentiel est transmis à la mâchoire 56, c'est-à-dire à la section 56c et ainsi à l'extrémité 41a du câble 41. Lorsque le fusible est extrait, la liaison électrique entre les mâchoires 54 et 56 est interrompue.

Un couvercle 59d est articulé sur un bord du logement 67 grâce à des languettes 59e, ce qui permet d'isoler le fusible 60 d'un contact extérieur lorsque le fusible est en place dans le logement 67. Le connecteur ainsi fermé est conforme aux normes d'isolation électriques actuelles et, notamment, au standard IP2X de la norme NF EN 60529.

Dans sa partie aval, l'enveloppe 59 forme une coiffe 59f pour le cavalier 57, cette coiffe étant pourvue d'un orifice 59g permettant le passage et la manoeuvre de la vis 58. Une encoche 59h est prévue en regard de l'encoche 55c de la plaque 55, de telle sorte qu'il est formé un orifice 69 de passage de l'extrémité 41a du câble 41 vers l'intérieur de l'enveloppe isolante ainsi formée.

Grâce à la structure décrite ci-dessus, le connecteur 31, et les connecteurs 32 à 34 qui lui sont identiques, permettent d'obtenir la configuration représentée à la figure 1.

La valeur de l'angle α est variable et peut être choisie entre 20 et 70°. Des résultats particulièrement intéressants ont été obtenus avec un angle α compris entre 30 et 50° alors que la valeur de 40° indiquée ci-dessus est particulièrement adaptée sur des connecteurs destinés à être montés, par groupe de quatre, sur une largeur d'environ 100 mm.

Il n'est pas nécessaire d'utiliser un fusible avec le connecteur 34 raccordé sur la barre de neutre 4. Un barreau conducteur 70 peut remplir la fonction de raccordement des mâchoires amont et aval du connecteur 34 qui est, par ailleurs, identique aux connecteurs 31 à 33.

Afin d'éviter tout risque d'électrocution, on peut prévoir qu'une gaine isolante est disposée autour du barreau 70 sur toute sa longueur exposée dans le logement central du connecteur 34. Par ailleurs, les fusibles 60 et équivalents sont également isolés dans leur partie centrale, de telle sorte que les connecteurs 31 à 34 peuvent être considérés comme satisfaisant aux critères d'isolation électrique IP2X indépendamment de la présence du couvercle 59b.

Dans le second mode de réalisation de l'invention représenté aux figures 5 et 6, les éléments analogues à ceux du premier mode de réalisation portent des références identiques augmentées de 100. Dans ce second mode de réalisation, trois barres 101, 102, 103 véhiculent les phases d'un courant triphasé, alors qu'une barre de neutre 104 est prévue. Quatre connecteurs 131, 132, 133 et 134 sont prévus pour être disposés, au niveau de zones de raccordement 121 à 124, selon des direction Y₁-Y'₁ et Y₂-Y'₂ globalement perpendiculaires à la direction X-X' des barres 101 à 104 afin de permettre le raccordement de quatre conducteurs 141 à 144 appartenant à un câble 145. Comme précédemment, l'extrémité des conducteurs 141 à 144 émergeant des connecteurs 131 à 134 est orientée selon une direction A-A' inclinée, par rapport aux directions Y₁-Y'₁ et Y₂-Y'₂, d'un angle β de l'ordre de 40°.

La structure du connecteur 131 ressort plus clairement de la figure 6. Celui-ci comprend une semelle conductrice 151 sur laquelle est montée une mâchoire amont 154 alors qu'une mâchoire aval 156 est immobilisée sur une plaque de fond 155 solidaire de la semelle 151. Une vis 152 est prévue pour solidariser le connecteur 131 à la barre 101.

Un étrier 157, pourvu d'une vis de serrage isolante 158 et relié électriquement à la mâchoire 156, est orienté selon la direction A-A', de telle sorte que l'extrémité 141a du câble 141 est également orientée selon cette direction.

Une cloison périphérique 159 entoure les éléments 151 à 157, de telle sorte qu'elle les isole par rapport à l'atmosphère ambiante alors qu'elle est percée d'un orifice 169 de passage de l'extrémité 141a du conducteur 141. La cloison 159 est pourvue de deux lumières 159c de guidage d'un tiroir 165 dans lequel est disposé un fusible 160 pourvu de deux bornes 161 et 162 aptes à coopérer avec les mâchoires 154 et 156. Le tiroir 155 porte un voile supérieur 165a destiné à obturer l'ouverture supérieure de la cloison 159 lorsque le fusible est en place par rapport aux mâchoires 154 et 156, de telle sorte que les éléments susceptibles d'être portés au potentiel de la barre 101 sont efficacement isolés par rapport à l'atmosphère extérieure. Le couvercle 165a se prolonge au-dessus des vis 152 et 158 de sorte qu'il isole les éléments 152, 154 et 156 à 158 en position fermée du tiroir 165.

Dans sa partie proche du cavalier 157, l'enveloppe 159 comprend une partie incurvée 159i qui permet d'éviter toute interférence avec l'extrémité arrondie de la cloison périphérique du connecteur 133 et, donc, avec la vis de fixation de ce connecteur sur la barre 103.

De la même manière, la coiffe 59f et la bordure 55b du premier mode de réalisation sont configurées pour éviter les interférences avec les connecteurs voisins, y compris lorsque ceux ci sont très proches.

Il peut être prévu que les couvercles 59d et équivalents ou 165a et équivalents des connecteurs 31 à 33 ou 131 à 133 reliés aux barres de phases soient d'une couleur alors que le couvercle du connecteur 34 ou 134 relié à la barre de neutre est d'une couleur différente, notamment bleu, ce qui permet à un opérateur de repérer du premier coup d'oeil le connecteur 34 ou 134 et le conducteur 44 ou 144 reliés au neutre.

Pour la clarté des dessins, seules les parties essentielles des dispositifs de raccordement ont été représentées sur les figures. Cependant, chaque dispositif est conforme au standard de protection électrique IP2X et comprend des éléments d'isolation électriques, tels que des capots ou volets isolants, notamment au niveau des zones de raccordement sur les barres.

## Revendications

1. Connecteur (31-34, 31', 34' ; 131-134) de raccordement électrique d'un conducteur (41-44 ; 41',44' ; 141-144) à une barre (1-4 ; 101-104) d'un système à barres dans lequel plusieurs barres s'étendent parallèlement les unes aux autres selon une première direction (X-X') alors que ledit connecteur s'étend principalement selon une seconde direction (Y₁-Y'₁, Y₂-Y'₂) globalement perpendiculaire à ladite première direction et est pourvu d'un organe (52 ; 152) de connexion amovible sur ladite barre, ledit connecteur comprenant des moyens de réception d'une extrémité (41a ; 141a) dudit conducteur (41 ; 141), **caractérisé en ce que** lesdits moyens (56c, 57 ; 157) de réception sont aptes à immobiliser ladite extrémité dudit conducteur dans une position telle qu'elle est orientée selon une troisième direction (A-A') inclinée par rapport à ladite seconde direction (Y₁-Y'₁ ; Y₂-Y'₂).

2. Connecteur selon la revendication 1, **caractérisé en ce que** lesdits moyens de réception (56c, 57 ; 157) comprennent une partie (56c) prolongeant une mâchoire (56) de réception et de raccordement d'un élément fusible (60 ; 160) ou d'un barreau conducteur (70), ladite partie s'étendant selon ladite troisième direction (A-A').

3. Connecteur selon l'une des revendications précédentes, **caractérisé en ce que** lesdits moyens de réception (56c, 57 ; 157) comprennent une partie (56c) s'étendant selon ladite troisième direction (A-A') et conformée en pliant globalement en forme de U une languette (56d) bordée par des dents (56e).

4. Connecteur selon l'une des revendications précédentes, **caractérisé en ce que** ladite troisième direction (A-A) est inclinée par rapport à ladite seconde direction (Y₁-Y'₁, Y₂-Y'₂) d'un angle (α, β) compris entre 20 et 70 degrés, de préférence compris entre 30 et 50 degrés, de préférence encore de l'ordre de 40 degrés.

5. Connecteur selon l'une des revendications précédentes, **caractérisé en ce que** lesdits moyens de réception comprennent un étrier (57 ; 157) de blocage de ladite extrémité (41a ; 141a) dudit conducteur, ledit étrier étant orienté selon ladite troisième direction (A-A'):

6. Connecteur selon, Tune des revendications précédentes, **caractérisé en ce que** lesdits moyens (57 ; 157) de réception et d'immobilisation sont séparés de l'extérieur dudit connecteur (31-34 ; 31', 34' ; 131-134) par une enveloppe isolante (55, 59 ; 155, 159), ladite enveloppe étant pourvue d'un orifice (69 ; 169) de passage dudit conducteur (41 ; 141).

7. Connecteur selon la revendication 6, **caractérisé en ce que** ladite enveloppe isolante (55, 59 ; 155, 159) entoure à la fois lesdits moyens de réception (56c, 57 ; 157) et des mâchoires (54, 56 ; 154, 156) de réception et de raccordement d'un élément fusible (60 ; 160) ou d'un barreau conducteur (70).

8. Connecteur selon l'une des revendications 6 ou 7, **caractérisé en ce que** ladite enveloppe isolante (55, 59 ; 155, 159) est conformée pour ne pas gêner l'accès à un organe de connexion amovible (52 ; 152) d'un autre connecteur (31-33 ; 31', 34' ; 131-133), voisin selon ladite seconde direction (Y₁Y'₁, Y₂'Y'₂).

9. Connecteur selon la revendication 8, **caractérisé en ce que** ladite enveloppe (159) comprend une zone médiane incurvée (159i).

10. Connecteur selon l'une des revendications précédentes, **caractérisé en ce qu'**il comprend une semelle conductrice (51 ; 151) apte à être raccordée électriquement à ladite barre (1-4 ; 101-104) et formant âme pour ledit connecteur (31-34, 31', 34' ; 131-134).

11. Connecteur selon l'une des revendications précédentes, **caractérisé en ce qu'**il comprend une mâchoire amont (54 ; 154) et une mâchoire aval (56 ; 156) de réception et de raccordement d'un élément fusible (60 ; 160) ou d'un barreau conducteur (70), chaque mâchoire étant séparée de son environnement par une enveloppe isolante (55, 59 ; 155, 159).

12. Connecteur selon la revendication 11, **caractérisé en ce qu'**il comprend des moyens (59d ; 165a) d'isolation électrique de la partie dudit fusible (60 ; 160) ou dudit barreau conducteur (70) située à l'extérieur de ladite enveloppe isolante (59 ; 159), lorsqu'il est en place dans ledit connecteur (31 ; 131).

13. Connecteur selon l'une des revendications précédentes, **caractérisé en ce que** lesdits moyens de réception (56c, 57 ; 157) sont disposés dans le prolongement, selon ladite seconde direction (Y₁-Y'₁ ; Y₂-Y'₂), de mâchoires (54, 56 ; 154, 156) de réception et de raccordement d'un élément fusible (60 ; 160) ou d'un barreau conducteur (70).

14. Ensemble de raccordement électrique entre un jeu de barres (1-4 ; 101-104) et au moins un câble conducteur (45, 45' ; 145), **caractérisé en ce qu'**il comprend au moins un connecteur (31-34, 31', 34' ; 131-134) selon l'une des revendications précédentes

## Patentansprüche

1. Verbinder (31-34, 31', 34'; 131-134) für den elektrischen Anschluß eines Leiters (41-49); 41', 44'; 141-144) an eine Schiene (1-4; 101-104) eines Schienensystems, bei dem sich mehrere Schienen parallel zueinander entsprechend einer ersten Richtung (X-X') erstrecken, während der Verbinder sich hauptsächlich entsprechend einer zweiten Richtung (Y₁-Y'₁; Y₂-Y'₂) erstreckt, die im ganzen gesehen senkrecht zur ersten Richtung ist, und mit einem an der Schiene lösbaren Verbindungsorgan (52; 152) versehen ist, wobei der Verbinder Mittel zur Aufnahme eines Endes (41a; 141a) des Leiters (41; 141) umfaßt, **dadurch gekennzeichnet, daß** die Aufnahmemittel (56c, 57; 157) dazu geeignet sind, das Ende des Leiters in einer solchen Stellung festzulegen, daß es entsprechend einer dritten Richtung (A-A') gerichtet ist, die in Bezug auf die zweite Richtung (Y₁-Y'₁; Y₂-Y'₂ ) geneigt ist.

2. Verbinder nach Anspruch 1, **dadurch gekennzeichnet, daß** die Aufnahmemittel (56c, 57; 157) ein Teil (56c) umfassen, das eine Klemmbacke (56) zur Aufnahme und zum Anschluß eines Sicherungselementes (60; 160) oder eines leitenden Stabes (70) verlängert, wobei dieses Teil sich in die dritte Richtung (A-A') erstreckt.

3. Verbinder nach einem der vorhergehenden Ansprüche, **dadurch gekennzeichnet, daß** die Aufnahmemittel (56c, 57; 157) ein Teil (56c) umfassen, das sich in die dritte Richtung (A-A') erstreckt und das gebildet wird, indem eine im Ganzen gesehen eine U-Form aufweisende Zunge (56d), die von Zähnen (56e) eingefaßt ist, gebogen wird.

4. Verbinder nach einem der vorhergehenden Ansprüche, **dadurch gekennzeichnet, daß** die dritte Richtung (A-A') in Bezug auf die zweite Richtung (Y₁Y'₁, Y₂-Y'₂) um einen Winkel (α, β) zwischen 20 und 70°, vorzugsweise zwischen 30 und 50°, in noch bevorzugter Weise in der Gröβenordnung von 40° geneigt ist.

5. Verbinder nach einem der vorhergehenden Ansprüche, **dadurch gekennzeichnet, daß** die Mittel zur Aufnahme einen Klemmbügel (57; 157) für das Ende (41a; 141a) des Leiters umfassen, wobei der Kleimmbügel entsprechend der dritten Richtung A-A') gerichtet ist.

6. Verbinder nach einem der vorhergehenden Ansprüche, **dadurch gekennzeichnet, daß** die Mittel (57; 157) zur Aufnahme und zur Festlegung nach außen vom Verbinder gesehen durch eine isolierende Hülle (55, 59, 155, 159) getrennt sind, wobei die Hülle mit einem Durchgangsloch (69; 169) für den Leiter (41; 141) versehen ist.

7. Verbinder nach Anspruch 6, **dadurch gekennzeichnet, daß** die isolierende Hülle (55, 59; 155, 159) sowohl die Aufnahmemittel (56c, 57; 157) als auch Klemmbacken (54, 56; 154, 156) zur Aufnahme und zum Anschluß eines Sicherungselementes (60; 160) oder eines leitenden Stabes (70) umgibt.

8. Verbinder nach einem der Ansprüche 6 oder 7, **dadurch gekennzeichnet, daß** die isolierende Hülle (55, 59; 155, 159) so ausgebildet ist, daß sie organ (52; 152) eines anderen benachbarten Verbinders (31-33; 31', 34; 131-133) entsprechend der zweiten Richtung (Y₁-Y'₁, Y₂-Y'₂) stört.

9. Verbinder nach Anspruch 8, **dadurch gekennzeichnet, daß** die Hülle (159) eine nach einwärts gekrümmte Mittelzone (159i) umfaßt.

10. Verbinder nach einem der vorhergehenden Ansprüche, **dadurch gekennzeichnet, daß** er eine leitende Fußplatte (51; 151) aufweist, die für eine elektrische Verbindung mit der Schiene (1-4; 101-104) geeignet ist und den Kern für den Verbinder (31-34, 31', 34'; 131-134) bildet.

11. Verbinder nach einem der vorhergehenden Ansprüche, **dadurch gekennzeichnet, daß** er eine stromaufwärts angeordnete Klemmbacke (54; 154) und eine stromabwärts angeordnete Klemmbacke (56, 156) zur Aufnahme und zum Anschluß eines Sicherungselementes (60; 160) oder eines leitenden Stabes (70) umfaßt, wobei jede Klemmbacke von ihrer Umgebung durch eine isolierende Hülle (55, 59; 155, 159) getrennt ist.

12. Verbinder nach Anspruch 11, **dadurch gekennzeichnet, daß** er Mittel (59d; 165a) zur elektrischen Isolierung des Teils der Sicherung (60; 160) oder des leitenden Stabes (70) umfaßt, der außerhalb der isolierenden Hülle (59; 159) angeordnet ist, wenn sie (er) in dem Verbinder (31; 131) in Stellung ist.

13. Verbinder nach einem der vorhergehenden Ansprüche, **dadurch gekennzeichnet, daß** die Aufnahmemittel (56c, 57; 157) in der Verlängerung von Klemmbacken (54, 56; 154, 156) zur Aufnahme und zum Anschluß eines Sicherungselementes (60; 160) oder eines leitenden Stabes (70) angeordnet sind.

14. Anordnung zur elektrischen Verbindung zwischen einer Mehrzahl von Schienen (1-4; 101-104) und mindestens eines Leiterkabels (45, 45'; 145) **dadurch gekennzeichnet, daß** sie mindestens einen Verbinder (31-34, 31', 34', 131-134) nach einem der vorhergehenden Ansprüche umfaßt.

## Claims

1. Connector (31-34, 31', 34'; 131-134) for electrical connection of a conductor (41-44; 41', 44'; 141-144) to a busbar (1-4; 101-104) of a busbar system in which several busbars extend parallel to one another in a first direction (X-X') whilst the said connector extends mainly in a second direction (Y₁-Y'₁, Y₂-Y'₂) that on the whole is perpendicular to the said first direction and is provided with a detachable connection member (52; 152) on the said busbar, the said connector having means for receiving one end (41a; 147a) of the said conductor (41; 141), **characterised in that** the said receiving means (56c, 57; 157) are suitable for immobilising the said end of the said conductor in a position such that it is oriented in a third direction (A-A') that is inclined with respect to the said second direction (Y₁-Y'₁, Y₂-Y'₂).

2. Connector according to Claim 1, **characterised in that** the said receiving means (56c, 57; 157) comprise a part (56c) prolonging a clamping jaw (56) for receiving and connecting a fuse cartridge (60; 160) or a conducting bar (70), the said part extending along the said third direction (A-A').

3. Connector according to one of the preceding claims, **characterised in that** the said receiving means (56c, 57; 157) comprise a part (56c) extending along the said third direction (A-A') and shaped, by bending generally in the shape of a U, [lacuna] a tongue (56d) bordered by teeth (56e).

4. Connector according to one of the preceding claims, **characterised in that** the said third direction (A-A) (sic) is inclined with respect to the said second direction (Y₁-Y'₁, Y₂-Y'₂) at an angle (α, β) of between 20 and 70 degrees, preferably of between 30 and 50 degrees and more preferentially of the order of 40 degrees.

5. Connector according to one of the preceding claims, **characterised in that** the said receiving means comprise a clamp (57; 157) for locking the said end (41a; 141a) of the said conductor, the said clamp being oriented in the said third direction (A-A').

6. Connector according to one of the preceding claims, **characterised in that** the said receiving and immobilising means (57; 157) are separated from the exterior of the said connector (31-34; 31', 34'; 131-134) by an insulating cover (55, 59; 155, 159), said cover being provided with a passage (69; 169) for the said conductor (41; 141).

7. Connector according to Claim 6, **characterised in that** the said insulating cover (55, 59; 155, 159) surrounds at one and the same time the said receiving means (56c, 57; 157) and clamping jaws (54, 56; 154, 156) for receiving and connecting a fuse cartridge (60; 160) or a conducting bar (70).

8. Connector according to one of Claims 6 or 7, **characterised in that** the said insulating cover (55, 59; 155, 159) is shaped so as not to obstruct the access for a detachable connection member (52; 152) of another neighbouring connector (31-33; 31', 34'; 131-133 ) in the said second direction (Y₁-Y'₁, Y₂-Y'₂).

9. Connector according to Claim 8, **characterised in that** the said cover (159) has a concave mid zone (159i).

10. Connector according to one of the preceding claims, **characterised in that** it comprises a conducting soleplate (51; 151) suitable for electrical connection to the said busbar (1-4; 101-104) and forming the core for the said connector (31-34, 31', 34'; 131-134).

11. Connector according to one of the preceding claims, **characterised in that** it comprises an upstream clamping jaw (54; 154) and a downstream clamping jaw (56; 156) for receiving and connecting a fuse cartridge (60; 160) or a conducting bar (70), each clamping jaw being separated from its surroundings by an insulating cover (55, 59; 155, 159).

12. Connector according to Claim 11, **characterised in that** it comprises means (59d; 1650a) for electrical insulation of the part of the said fuse (60; 160) or the said conducting bar (70) located on the outside of the said insulating cover (59; 159) when it is in place in the said connector (31; 131).

13. Connector according to one of the preceding claims, **characterised in that** the said receiving means (56c, 57; 157) are arranged in the extension, along the said second direction (Y₁-Y'₁, Y₂-Y'₂), of clamping jaws (54, 56; 154, 156) for receiving and connecting a fuse cartridge (60; 160) or a conducting bar (70).

14. Assembly for electrical connection between a set of busbars (1-4; 101-104) and at least one conducting cable (45, 45'; 145), **characterised in that** it comprises at least one connector (31-34, 31', 34'; 131-l34) according to one of the preceding claims.
